# EUROPEAN PATENT SPECIFICATION

(11) **EP 0 716 018 B1**
(45) Date of publication and mention of the grant of the patent: **10.02.1999**
(21) Application number: 95118360.7
(22) Date of filing: 22.11.1995
(51) Int. Cl.: B65B 25/06, A22C 11/00, B65B 13/12

(54) **Single end knot-tying machine**
Knotmaschine mit einzelnem Ende
Machine de nouage à bout unique

(30) Priority: 01.12.1994 IT RE940101; 13.07.1995 IT RE950039
(43) Date of publication of application: 12.06.1996
(73) Proprietor: Ronchei, Claudio, 43038 Sala Baganza (Parma) (IT); Ronchei, Giuliano, 43038 Sala Baganza (Parma) (IT); Merusi, Riccardo, 43100 Parma (IT)
(72) Inventor: Ronchei, Claudio, 43038 Sala Baganza (Parma) (IT); Ronchei, Giuliano, 43038 Sala Baganza (Parma) (IT); Merusi, Riccardo, 43100 Parma (IT)
(74) Representative: Lecce, Giovanni

(56) References cited:
- EP-A- 0 399 304
- DE-A- 3 219 163
- FR-A- 2 530 580
- US-A- 2 328 085

## Description

The invention relates to a single end, knot-tying machine, substantially formed by a central tying head (see EP-A-399 304 or US-A-2 328 085).

Bodies to be tied are guided through a tubular duct, while a tying element, for instance a string, a rope, a cable, a ribbon or the like is at first caused to adhere to a side of the same bodies during the longitudinal sliding, then is caused to adhere to the opposite site, in alternation with circular, peripheral turns. As a consequence, the longitudinal tying develops at the same time as the perimetric tying, step by step, with knot superpositions obtained through a rotatory wrapping up movement of the string at each turn, with a raising and overtaking movement of the spool unwinding the same string.

The tubular duct is formed by at least a couple of opposite tiles with a spacing channel, with possible longitudinal runways and at least a peripheral slit for the passing of the tying strings or the like in both directions.

Within the tubular duct there may be rods or pushers suitable to guide and push the bodies to be tied, which may be indifferently: meats, salami, sacks, carpet packings, provolone cheese, or other wrapped up products and so on.

At present, there are known products which are prepared and wrapped up by means of longitudinal and peripheral tyings, according to substantially oblong configurations. The realization of such tyings is obtained by rather obsolete means or mechanical devices which are not adequately functional or which do not comply any longer with the modern requirements.

In particular, such drawbacks are noticed in the field of food preparation, such as for instance, meats, cheeses, salami.

Because of these specific requirements, manual means are still used at present by skilled but expensive people, or mechanical means are used which however perform only partly their tasks, so that finishings are always hand-made.

In any case, the tyings obtainable mechanically are not of the type with knots, with the evident drawback of a poor quality of the preparation.

The object of this invention is to eliminate the above drawbacks.

The invention, such as is characterized by the claims, solves the problem by means of a single end knot-tying machine, through which the following results are obtained:
the tying is carried out in a substantially automatic manner, both longitudinally and perimetrically, step-by-step, with knot-tying at each turn; the machine comprises a tubular duct of adjustable size for tying bodies having different dimensions; the tying is obtained by the combination of a rotatory alternate motion around the body and an alternate step-by-step advancing motion; the wrapping up in the longitudinal and the peripheral directions is obtained by means of a continuous, single end tying element, a string or the like; the body to be tied is guided longitudinally with the possible help of adjustable automatically advancing rods or pushers.

The advantages obtained through this invention lie essentially in that the complete; tying operation is carried out in a substantially automatic manner, in short times, in a simple and functional way and in adantageous conditions from both the general economic viewpoint and the particular health viewpoint, with reference to the treatment of food; the tying of food takes place by a combined system of wrapping up of the tying element, string or the like, by means of knotting of the peripheral turns with at least one of the longitudinal turns, with ensuing perfect tying and resistance of the same in the time.

Other advantages lie in that the central tying head is applicable and utilizable for any application where the knotting of a thread-like element and the like is required, such as for instance tubular elements with an external covering wrapped up and restrainable by means of a knot-tying, salami and other food with continous external tying, fabrics in which buttons or the like are previously or sequentially sewn, sausages with sequential step-by-step knottings such as sausages and the like, and so on.

The invention will be described and illustrated in the following according some different embodiments of the same, with reference to particular applications suggested only by way of non limitative examples, with reference to the attached drawings, wherein:

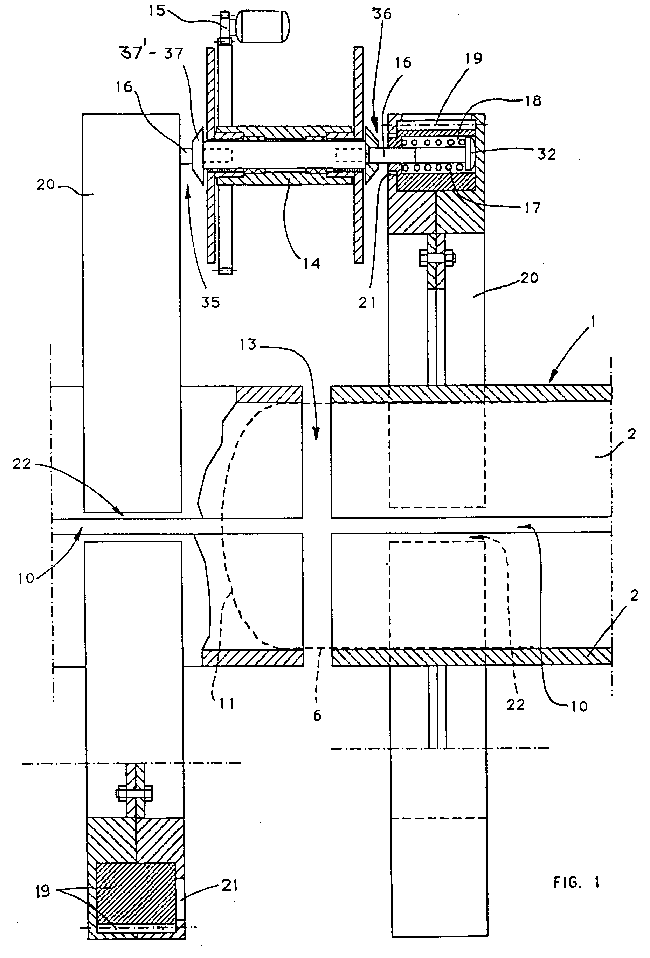

Fig. 1 is a through-section of the whole tying head, stressing the most significant details related to the wrapping rotation,

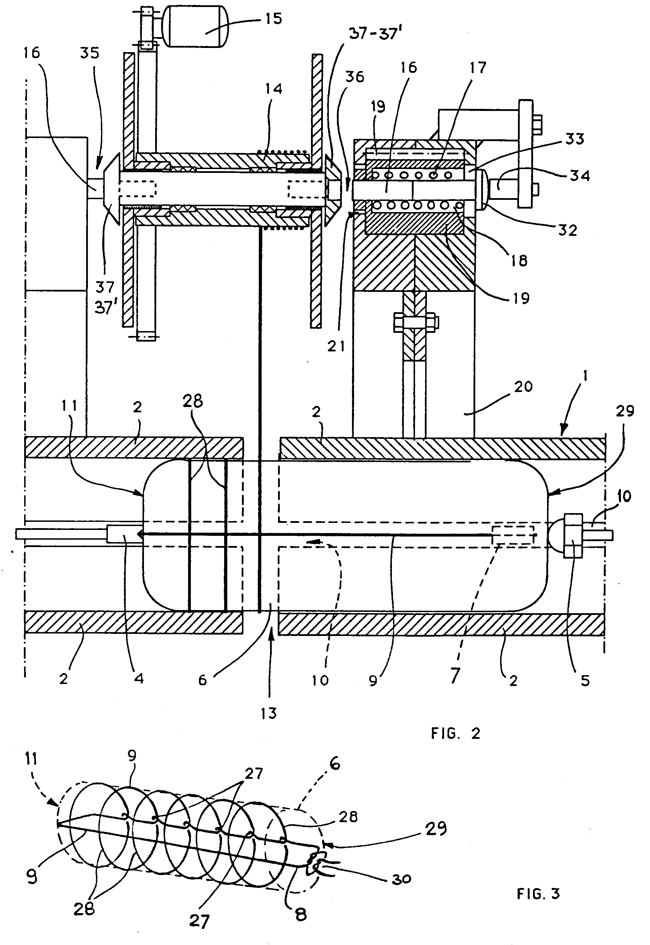

Fig. 2 is the cross-section of a first embodiment, during the stage of overtaking of the rotation means by the string turn, for the knotting, Fig. 3 shows the trend of the tying string or rope turns obtained with this invention,

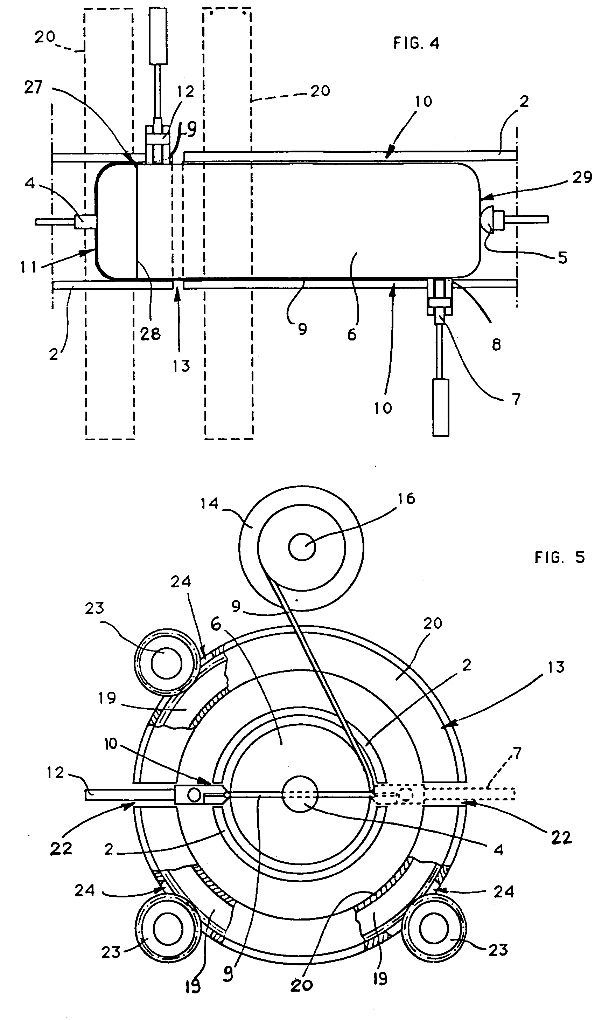

Fig. 4 is a plan view of an embodiment of the system with the positioning of the end pliers and the operating pliers for the continuous tying of the bodies,
Fig. 5 is a front view, illustrating by way of example the rotation controls,
Fig. 6 is a general view-longitudinal section of the knotting machine according to a different embodiment,
Fig. 7 is a partly view-plan section of an embodiment of an elastic front pusher,
Fig. 8 is a cross-section with a plan view of an embodiment of a friction grip applied to the mobile feeding arm of the knotting string,
Fig. 9 is a view-cross section of the machine of Fig. 7, in correspondence of the winding spool of the string, or the like, during the loading,
Fig. 10 is the same view-cross section of Fig. 9, with the spool loaded with string or the like, in the starting position of the working stage,
Fig. 11 is a view-cross section of an example of supporting stirrup of the spool, with several mobile supporting pins on each side, with sequential opening and closing,
Fig. 12 is a plan view of the same supporting stirrup of Fig. 11,

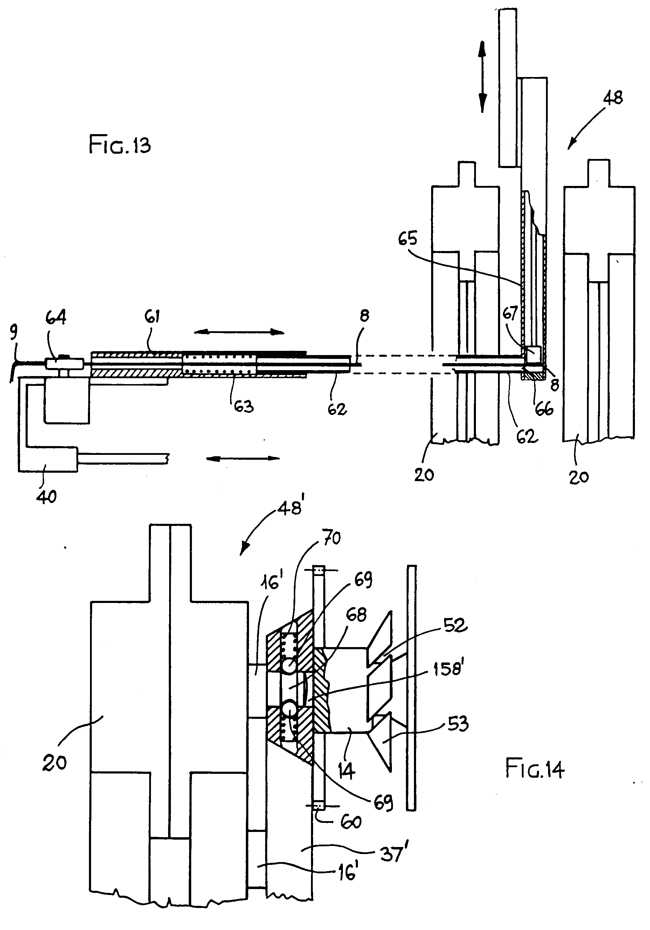

Fig. 13 is a view-cross section of another embodiment of a feeding and hooking system of the string end, from the mobile arm to the engagement grip of said end with the wrapping up spool.
Fig. 14 is a further embodiment of the unilateral supporting system of the spool for a solution with a single rotating circular plate wheel, and

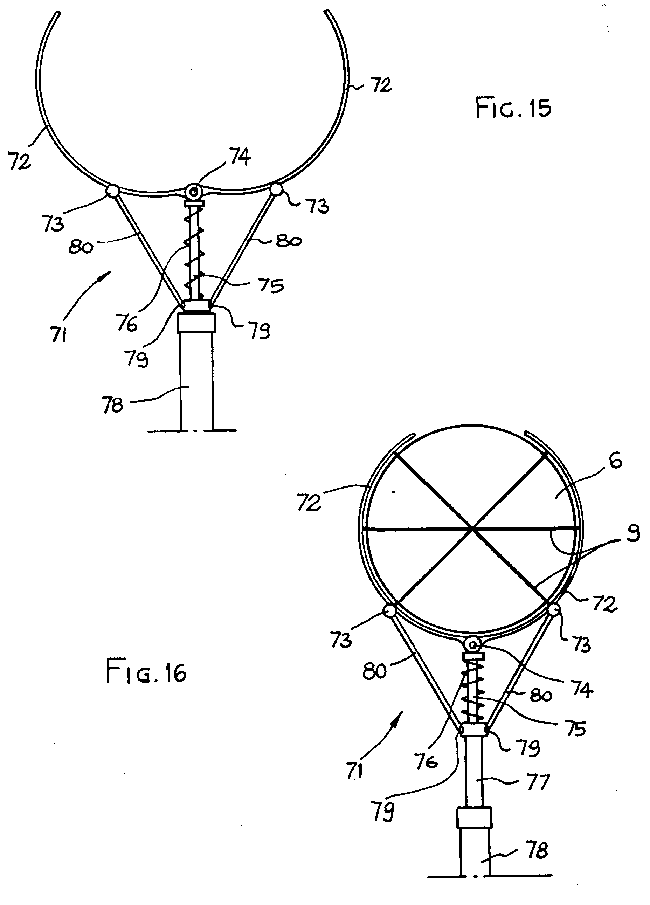

Figs. 15 and 16 show a peripheral gripping means for the bodies to be tied, during the opening and the closing stage, for the holding of longitudinal ties, during the stretching of the circumferential tying ends.

The figures show a single end knot-tying machine, substantially formed by a central head 48 composed by a tubular duct 1 constituted by at least a couple of tiles 2, which may be radially adjusted according to the sizes of bodies 6 to be tied. Tiles 2 may be configurated with a circular development for cylindrical bodies 6, or with other profiles for products having different sections.

In the specific description, developed in the following by way of example, a solution is considered that is utilizable for tying cheese of the provolone type: in this case tiles 2 may be configurated with one only couple, for a two-string longitudinal tying, or with two couples for a four-string longitudinal tying. With such reference, the tubular duct 1 comprises a central adjustment and trueing rod 4 and a back pusher 5. The provolone 6 introduced into duct 1 is kept in position and pushed forwards (leftwards in the drawing) between said rod 4 and said pusher 5. In this condition, the first fixed side pliers 7 lock end 8 of a string 9 near the side of product 6, in alignment with the longitudinal cavity 10 circumscribed by the approaching of the two opposite tiles 2.

During the advancing motion, product 6 unwinds and drags along string 9, keeping it approached to one side, while the end that unwinds remains engaged with bottom 11. Once the advancing has ended, the second pliers 12 grip string 9 near a peripheral cavity 13 of tiles 2, in correspndence of wich cavity a spool 14 is provided on which the rest of the string is wound. The second pliers 12 are positioned opposite to the first pliers 7, and spool 14, provided with a potential minidivider 15, is mounted on at least a couple of pins 16, which elastically engage, by means of springs 17, in seats 18 obtained in as many circular plate wheels 19. The plate wheels 19 slide within fixed seats coaxially mounted relatively to the tubular duct 1. Seats 20 are provided with circumferential slits 21 through which pins 16 supporting spool 14 protrude.

Due to the fact that string 9 has to unwind longitudinally along the sides of products 6 and, for this reason, it has to pass along the longitudinal cavities 10 circumscribed by the approachment of tiles 2, also seats 20 and plate wheels 19 are provided with as many cavities 22; therefore, they are formed by radially cut opposite sectors.

Seats 20 are suitably connected to the loadbearing structure of the machine, while plate wheels 19 are kept in position, with sliding rotation within said seats, by a number of pinions 23 which engage with the same through peripheral openings 24. Preferably, pinions 23 are moved by one only movement means, constituted, for instance, by pulleys activated by one motor-belt, or other suitable device.

With such plate wheels 19, spool 14 is caused to rotate around the tubular duct 1 and string 9 which unwinds from it wraps up product 6, through the peripheral cavity 13.

At each complete turn, the spool stops with string 9 kept stretched: sequentially, the second pliers 12 go back, dragging along the part above said spool. Afterwards, product 6 is caused to advance by a step, and the second pliers 12 let go at first their hold on the string, then position on the same a step forwards and engage with the same, while minidivider 15 stretches it again. In this operation, string 9 crosses, creating a knot 27 which places itself in alignment by side of product 6. Proceeding in this direction step-by-step, equidistant tying loops 28 create which align for the whole length of product 6, which loops restrain on one side the first longitudinal tying obtained by the first side pliers 7, and create on the opposite side the second longitudinal tying constituted by the lenghts reformed step-by-step by the second pliers 12, between each loop and the following one.

At the end, the first end 8, disengaged from the first side pliers 7, and the end engaged by the second pliers 12, are gathered and knotted 30 in correspondence of the second bottom 29.

To allow the passing of string 9 above spool 14, pins 16 on which said spool is supported, are alternately retractable. For this reason, they are located within seats 18 obtained in plate wheels 19, and are provided with antagonistic springs 17 which exercise their pressure against caps 32, integral with the pins.

On the back surfaces of seats 20, cam-grooves or openings 33 coupled to external cams 34 are obtained. In synchronism with the end of each turn of spool 14 around the tubular duct 1 and the backwards motion of the second pliers 12 gripping string 9, a first pin 16, for instance the one on the left side in the drawings, goes back, as its cap 32 aligns with opening 33 of its corresponding seat 20, and its spring 17 releases.

In going back, pin 16 disengages from spool 14 the moment when string 9, pulled by pliers 20, enters throat 35 between said seat 20 and the spool. Immediately after the passage of the string, the corresponding cam 34 compresses cap 32, which is obliged to re-enter recess 18, and pin 16 protrudes again from the same seat, reassuming its starting engagement position on the spool.

Sequentially, the same stage of disengagement and backwards motion of the opposite pin 16 takes place in the same way as described above, so that string 9 passes also in throat 36, between the opposite seat 20 and the spool.

To facilitate these passings, spool 14 is provided with side truncated-cone conveyors 37.

The protruding ends of pin 16 have a polygonal shape and engage in corresponding seats of spool 14, so as to form an engagement adequate to the restraint and the support of the same spool.

Alternatively and to ensure a better stability during the sliding of string 9 along throats 35 and 36, the axle of spool 14, instead of being directly engaged with the mobile pins 16, is engaged on two intermediate side plates 37', which substitute the coaxial truncated-cone elements 37.

These plates keep the peripheral guide chamferings of string 9, and at the sides of the supports of the axle of spool 14, have for instance two or better three complemetray profiled seats wherein engage as many mobile pins 16 protruding from the corresponding coupled seats 18 obtained in the bodies of each plate wheel 19.

Substantially, on each side of spool 14 a plate 37' is provided having several profiled seats wherein engage as many mobile pins 16, one for each side, relatively to the support of the axle of the same spool.

During the rotation around duct 1, pins 16 support and guide plates 37' on which the ends of spool 14 are engaged. At the end of each turn, the plate wheels stop temporary, together with the spool; the second pliers 12 go back, dragging along the part of string on which they hold grip; they raise it and cause it to pass above the same spool.

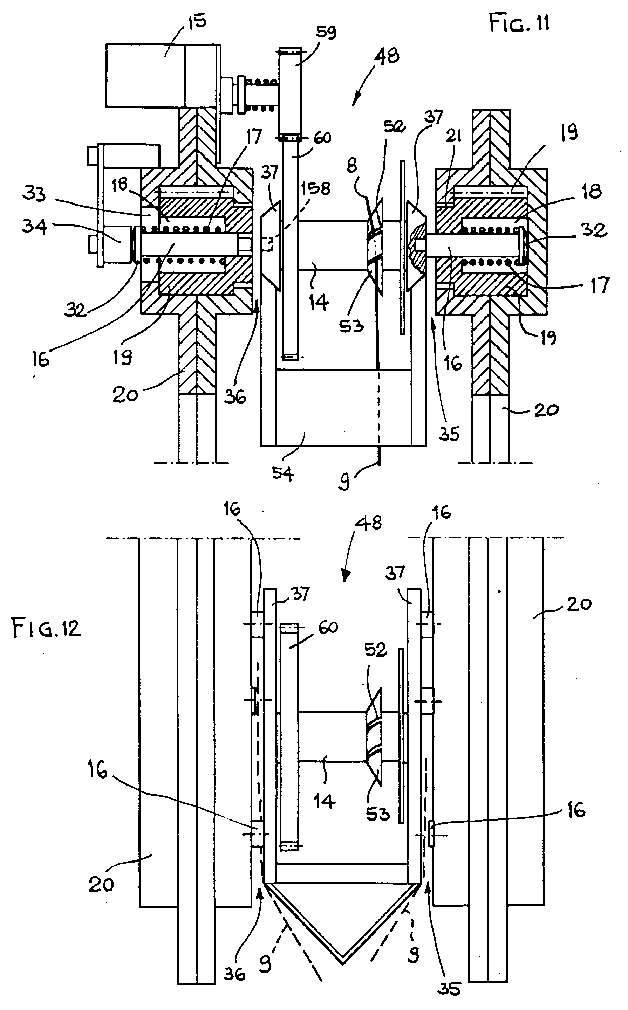

Figs. 11 and 12 show the support system of spool 14 with several side pins, for instance three for each side, engaged in as many seats 158 obtained in the support side stirrups 37'.

The moment when pliers 12 raise string 9 above spool 14, the latter restarts its rotation around the central duct 1 and advances: the string meets subsequently pins 16 which however go back on its arrival, allowing it, one after the other, to pass along throats 35 and 36, firstly on one side, then on the opposite side, to assume afterwards the starting position of engagement of the corresponding ends with the corresponding seats 158 of said side supports 37.

To sum up, string 9 overcomes step-by-step first from one side, then from the opposite side, the various pins which go back to allow it to pass, to return then to the engagement position with stirrups 37', after each passage.

At the end, the end engaged in spool 14 passes under string 9, so that, after the following recovery, it forms a knot on the surface of the body to be treated 6.

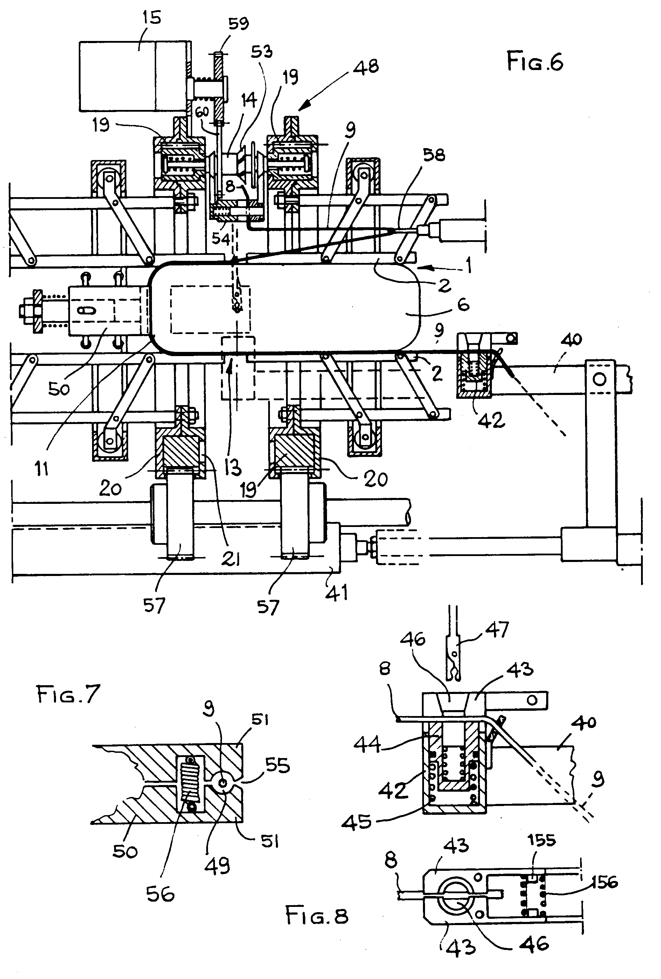

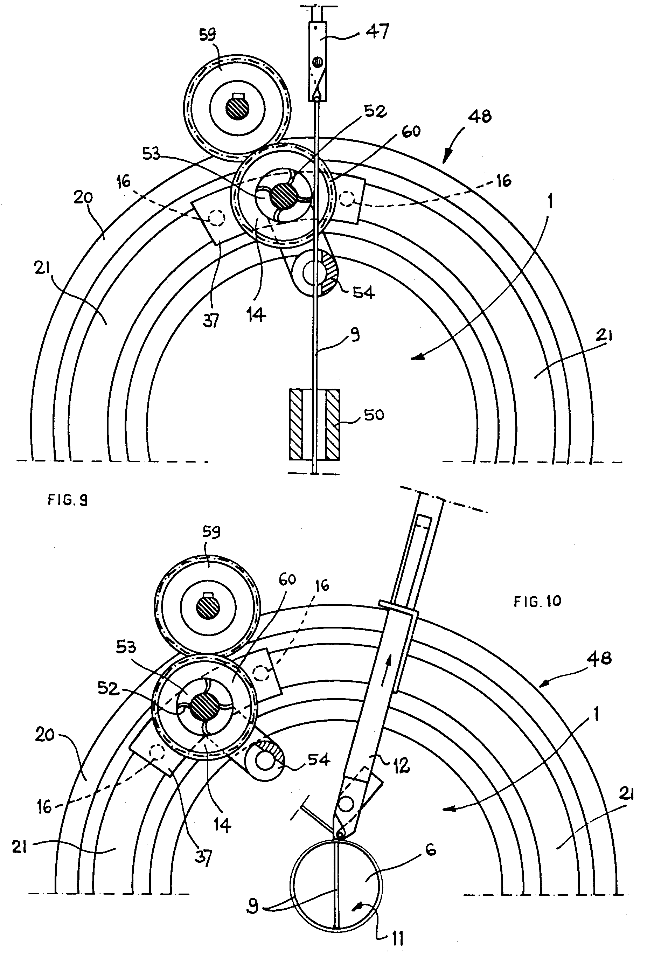

Figs. 6 through 11 show different alternative embodiments of the same central working head 48, of its components and its working.

Before the advancing of product 6 to be tied, end 8 of string 9 is caused to advance along the axis of the machine by means of a mobile arm 40, whose translation is controlled by a piston 41 or a corresponding means.

To the mobile arm a friction grip 42 is connected in which said end 8 engages. Grip 42 comprises upper pliers 43 and a friction pusher 44 with back spring 45.

The jaws of pliers 43 form an annular space 46 wherein small pliers 47 may insert orthogonally having an alternate motion, orthogonal to the one of the mobile arm 40.

The advancing along the axis of the machine cause end 8 of string 9 to align with the central head 48, substantially formed by the fixed seats and circular sectors 20, the related circular sector plate wheels 20, the related circular sector plate wheels 19, and the wrapping up spool 14 with its support and translation means.

In such alignment position, pliers 47 advance until they engage with the above end 8 of string 9, hook up with it and go back to their starting position, dragging along the same string which slips off from the friction grip 42, keeping its tautness.

In the slipping off, the jaws of the upper pliers 43 open elastically, under the traction action of the small pliers 47, being hinged on a fulcrum 155 provided with a return elastic means. In this way the string may be causes to slide easily.

In order to keep the string constantly and correctly aligned during its traction, the small pliers 47 work in the aforementioned way through a guide duct 49 obtained in the front part of a front elastic pusher 50, provided with opposite openable jaws 51.

Obviously, during the engagement, the small pliers 47, the annular space 46 of the upper pliers 43 of grip 42, and the guide duct 49 of pusher 50, are aligned with one another.

When the small pliers 47 assume their starting return position, string 9 is substantially aligned with the radial grooves 52 of a cone-shaped fan 53, coaxially located relatively to spool 14.

During the rotation, end 8 of string 9 engages between the radial grooves 52 of said fan, the small pliers 47 let go their hold, and the string rotatingly winds on spool 14, for a prefixed and planned length, according to the type, dimensions of the tying and the advancing rate of the product to be treated and/or the number of products of a prefixed configuration to be wrapped up and tied in the production sequence.

A friction 54 keeps the string taut, both during the wrapping up and the recoveries.

Substantially, in this second embodiment, on spool 14 is wound, in a fully automatic way, the quantity of string necessary to tie a prefixed product 6. The free end of the string remains constrained on the spool, while the other end remains engaged in the upper pliers 43 of the friction grip 42 which, during the working stage, goes back up to its starting position, outside the passage space of products 6, but with the string stretched.

The above going back causes the elastic opening of the aforementioned pliers 43 and the engagement in the same of string 9, which, in such condition, is already positioned for the following tying operation.

In its advancing along duct 1 between tiles 2 and concentrically with the central head 48, the body to be tied meets the front elastic pusher 50 and pushes it forwards; so, string 9 assumes a diametral position on the front part of the same body, after having slipped off because of said pressure from the guide duct 49 of the elastic jaws 51 and having positioned in the alignment sector 55. The slippig off takes place thanks to the elastic opening of said jaws 51, kept stretched with at least an elastic body 56.

In this way, string 9 remains longitudinally taut on a side of body 6 of grip 42 up to its aforementioned diametral frontal part, or bottom 11, and beyond, on the opposite longitudinal side, up to the alignment point substantially located in the middle of head 48, in correspondence of the circumferential cavity 13.

Now the second pliers 12 grip string 3 near said peripheral cavity 13, between tiles 2, in correspondence of which cavity spool 14 on which the tying string is wound is aligned.

Pliers 12, opposite to pliers 42, engage with string 9 and go back with the same, raise it and put in the righ position to allow it to pass above spool 14 which at the same time is caused to rotatingly advance, always by means of the rotatory motion of the circular sector plate wheels 19, engaged with motor-pinions 23.

In such stage, according to the example illustrated in the drawings, pinion 59 of the spool winding motor is retracted by means of any known mechanical or electromechanical system, so as to unhook from the coupling with gear 60. The above condition is indispensable to allow the overtaking stage of the spool by the string.

The engament of pinion 50 with gear 60 is realized during the winding stage of the string on spool 14 and at each end of orbital rotation of the same spool around the product to be tied, to perform the necessary recovery and mantain the right tautness of the string, after which the toothed wheels are disconnected for the above mentioned reason: the tautness of the string is mantained by means of friction 54.

Alternatively, instead of a coupling with tothed wheels, a coupling with friction wheels may be utilized. In this case, a pulley is keyed on the motor shaft 15, on which pulley a belt holds grip which has a high friction coefficient. The belts wraps up on a second idle lag pulley, and a third pulley with the function of idler.

When the rotation of spool 14 is required, the system is caused to translate, with a mechanical or electromechanical device, until the lag pulley is aligned with the friction wheel mounted on the same spool, instead of pinion 60. The lag pulley and the friction wheel engage with one another by friction, through the interposition of the belt. In this way, the spool is caused to rotate.

During the raising of string 9, the second pliers 12 are helped by a hooking means or hook 58, which gather the unwound part of string 9 and keeps it taut orthogonally towards the back to an extent sufficient and adequate to allow its passing above spool 14. As the string is caused to pass beyond the spool, hook 58 returns gradually, yielding the fullness of the same.

At each knot made, body 6 is caused to advance at a prefixed rate and the above described operations are repeated up to the full circumferential tying.

At the end, the end restrained in the friction grip 42 is still kept in its position, while around it several sequential knotting stages are performed, proceding in the same way as described. In this way, body 6 is fully knotted also in closure: end 8 detaches from fan 53, as the string has fully unwound, and the end of grip 42 is cut, releasing the finished body 6.

In a second embodiment, the mobile arm 40 is provided with a fixed tubular body 61 in which a tubular stock 62 is placed and pushed forwards by a spring 63. Beyond body 61 two friction wheels 64 are provided, kept in touch by elastic means, such as springs.

End 8 of string 9 is friction-engaged betweem wheels 64, while the back part is kept taut by pneumatic pliers, or the like.

When the mobile arm is caused to advance, the end of the tubular stock 62 is caused to rest against a shell 65, provided with a side hole 66, alignable with the above tubular stock 62.

In said resting touch, the tubular stock stops, but body 61 sill advances, pressing spring 63; in this way, end 8 of string 9 is forced to enter shell 65.

A piston 67, provided in shell 65, lowers and restrains end 8 of the string, after which the same shell is retracted from such position, dragging along the string until it is aligned with the radial grooves 52 for the automatic hooking of fan 53.

Obviously, shell 65 is oriented in correspondence of cavity 13, of head 48, in alignment with said spool 14.

After the winding on spool 14 for a prefixed length, string 9, always stretched by the back pliers, is cut by a suitably positioned blade, so that head 8 is aligned anew with the tubular stock 62.

In fact, said head is coupleable with supporting and shifting means from tiles 2, as described, or to conveyor belts or rollers or the like for bodies 6 extended in the length, or also to flat supporting means, in which head 48 is orientable also parallelly with or without automatic product loaders.

A further configuration of head 48' utilizes a circular sector fixed seat or a continuous round seat 20, with spool 14 cantilever-supported on one only side strap 37', possibly with a more extended development, which is supported by a plurality of pins 16' protruding from one of the sides of said seat 20.

In this case, on plate whell 19, either of the type with sectors or of the continuous round type, seats 18 with spring 17 are also obtained for pins 16' provided with caps 32; there are still present the control cams 34, coupled and arranged in correspondence of openings 33, but the front ends of pins 16' comprise grooves 68 in which semiannular bodies or small spheres 69 kept in position by pressure springs 70 engage.

In substance, the grip of bodies 69 in grooves 68 is so regulated as to ensure the position stability of strap 37' and the related spool 14, relatively to the fixed seat 20 and the rotating plate wheel 19.

At the time of the necessary overtaking of string 9 above spool 14, to generate each knot, pins 16' behave the same way as described above, retracting from seats 158' to allow the passage of the string.

In this configuration, both springs 17 and cams 34 are so size as to overcome in either direction the force exercized by the pressure springs 70 on bodies 69, to disengage or engage the same from or in grooves 68.

Alternative solutions for the control of pins 16 or 16' are obtained by means of pneumatic or hydraulic actuators, or also by means of electromechanical systems, such as electromagnets or the like, operating in correspondence of or alternatively to said cams 34.

An accessory tool applicable to the described and illustrated tying machines, especially designed and prepared for tying products 6 with both longitudinal and circumferential turns, such as for instance, pressed pork neck, salami, provolone cheese and the like, consists of a peripheral gripping means 71, substantially formed by one or two or more couples of half-rings 72 hinged in an intermediate point of theirs 73 and having the fulcrum at one common end 74 on a retractable rod 75, with antagonistic spring 76. Rod 75 engages telescopically in stem 77 of a piston 78. At the end of said stem also the end parts 79 of arms 80 are connected, whose opposite ends constitute the above hinges 73 of the half-rings 72.

The so configurated gripping means is preferably but not limitedly arranged in alignment with cavity 13 of the central head 48, with the half-rings 72 located astride the zone in which string 9 wraps up circumferentially body 6 at each knot formation.

At the end of each knot formation, when spool 14 has passed under the string re-extended by pliers 12 and stretched by hook 58, and before the same string is retaken by the spool to recover its fullness and to stretch the just made knot, the gripping means 71 is caused to advance until it brings in touch the common end 74 with body 6 being tied.

The pressure exercized by piston 78 causes the backwards motion of rod 75, with ensuing closing rotation of the half-rings 72 around hinges 73. The half-rings 72 close in this way on body 6 pressing on the same and imprisoning the longitudinal tying turns in the wished position. The sequential recovery of the string by spool 1 finds the longitudinal tying turns perfectly held and caused not to be in condition of sliding transversally due to the friction exercized on the same by the circumferential turn of the knot being formed, which is subject to traction. Once the traction has ended, piston 78 causes the return of stem 77; the antagonistic spring 76 expands, pushing outwards the common fulcrum 74, and the half-rings 72 open rotating around their hinges 73. Body 6, freed from the grip of means 71, can in this way advance by a step, and prepare for the automatic execution of the following knot.

In case of longitudinal tyings with four, six, eight turns, it suffices to prepare the same sequentially, before performing the last knotted ring tying cycle, causing product 6 to advance, as described, in the first turn until the two first opposite turns of longitudinal tying are obtained, then to perform a rotation of the product by over 180°, or of the restraint means of the string, so that the latter crosses forming a knot, and the position of the following horizontal turns is so oriented as to allow the formation of the following couples. For four turns, the backwards return of product 6 coincides with the formation of said turns and the circular tyings. For six turns, there is provided a second formation return and a following forming passage of the two last longitudinal turns and of the circular ones. An so on for thicker tyings.

From what has been described above by way of non limitative example, it is apparent that the working head 48 as a whole constitutes in itself a real tying machine, independent and suitable for any type of knotting operation, independently on the type, shape, size and structure of the product to be treated.

The versatility of the central head 48, with one or two fixed side seats 20 and plate wheels 19, inclusive of spool 14 with the related single or double supporting means 37, 16, with automatic hooking 53 of end 8 of string 9, with the rotation means 15 and 47, with friction 54 and the accessories specified in the description, is such as to allow wrapping ups with knottings on any type of products: from food, sausages and meats and other ones, such as pressed pork, salami, cheese submitted to step-by-step wrapping: from the most specific ones, with end knotting for hams, or with alternate constriction knotting for sausages; from those relating to any product, even of great length, such as piping sections to be covered with insulating materials or the like, peripherally tied; from those relating to clothing, where the sewing of buttons or the like require a consistent knot fixing; from any other application requiring the presence of thread-like elements, such as thread, string, rope or the like, to be engaged with knots.

While this invention has been described and illustrated with reference to some embodiments suggested by way of non limitative example, it will be apparent to those skilled in the art that various changes in the shapes, configurations, arrangement of the various components, coupling with loading and unloading means, structure, orientation, actuation and control means and the specific applications may be made within the scope of this invention as defined in the claims.

## Claims

1. A single end knot-tying machine constituted by a central operating head (48) comprising at least an annular body (20) subdivided into sectors, with circumferential rotation means (19) in which engage, with pins (16'), or couples of orthogonal pins (16), a loadbearing structure (37) or (37') supporting a spool (14) for thread-like tying elements (9); said annular body (20) being coupled to pliers or restraint members (7), (12), (42), (47), which, acting on said thread-like element (9) contribute to keep the same in longitudinal adherence to the periphery of bodies (6) on which the tyings are to be performed and in temporary locking, said spool (14) being caused to rotate around said bodies (6), alternatingly with step-by-step axial advancing of the same, characterized in that, said pins (16) or (16') are coaxially engaged with axial sliding devices (17), (32), (34) alternately and sequentially operating said pins or couple of pins and in that said pliers or restraint members (7), (12), (42), (47) further contribute to keep said thread-like element (9) in traction with centrifugal radial translation and following return, with overcoming of said spool.

2. The knot-tying machine of claim 1, characterized in that it comprises a tubular duct (1), formed by couples of peripherally arranged tiles (2), in which a body (6) progressively advances, engaging longitudinally, from one side, with a tying element or string (9), whose end is engaged in first side pliers (7) and, on the other side, in the continuation of the same string (9), which engages in second pliers (12) which restrain it while the same string unwinds from a spool (14) during each turn which said spool is engaged to perform around the tubular duct, and therefore the body to be tied, in tie-combination with plate wheels (19) located in annular seats (20), coaxial with the tubular duct (1): said couples of tiles (2) being approachable to one another but for the presence of longitudinal grooves (10) for the passage of the longitudinal turns of strings (9) and a peripheral groove (13) for the passage of the same string (9) for the peripheral step-by-step wrapping up; the step-by-step loop wrapping up being alternated by a raising of the end of string (9), engaged in the second pliers (12), which open, pass above, at each turn of the spool, and reclose on the side of body (6), always gripped by the second pliers (12); said passage being combined with the disengagement and recoupling of pins (16') or couples of side pins (16) with the corresponding coaxial seats obtained on the axle of the supports (13) of spool (14), alternating with one another and according to the passage of string (9), pulled by said second pliers (12).

3. The tying machine according to claims 1 and 2, characterized in that plate wheels (19) are engaged in circumferential sliding within fixed annular seats (20) coaxial with the tubular duct (1) and in that said plate wheels (19) and seats (20) are made up by at least two halves, far form one another in the diametral direction by a distance such as to form diametral cavities (22) which, at each turn, align with the longitudinal cavities (10) obtained between the approached couples of tiles (2): said plate wheels or sectors of plate wheels being caused to rotate and kept in position by a plurality of peripheral pinions (23) which engage with them through peripheral openings (24) obtained on the fixed seats (20), which comprise also circumferential slits (21), from which protrude, and follow the rotatory path of the plate wheels (19), the pins or the couples of side pins (16), (16') supporting spool (14) on which string (9) is wound; the above pins (16) or (16') are located in seats (18) placed transversally to said plate wheels (19) and remain therein by means of antagonistic springs (17) which act on their caps (32).

4. The tying machine according to claims 1, 2 and 3, characterized in that the back walls of the fixed annular seats (20) have cam-like grooves or openings (33) coupled to external cams (34) with which they align, while pins (16), (16') are moved backwards by caps (32) of the same pins pushed by springs (17); said openings and cams being placed in correspondence of the stopping points of the rotation of spool (14) around the tubular duct, and the protrusion and restoring of the position of pins (16) or (16') correspond, alternatively, to the passages of the string (9) above spool (14) and along throats (35) and (36), comprised between the same spool and seats (20), with crossing of string (9) and knotting (27) of the same.

5. The tying machine according to claims 1 through 4, characterized in that the spool (14) from which string (9) unwinds, during the sequential and alternate peripheral rotations around bodies (6), is provided with a minidivider (16), which stretches the same string.

6. A tying machine according to claims 1 through 5, characterized in that the tubular duct (1) is constituted by one or more couples of tiles (2) peripherally opposite with open runways, longitudinal (10) and with at least a peripheral slit (13) for the passage of string (9) in both directions.

7. The tying machine according to claims 1 through 6, characterized in that the first pliers (7), restraining end (8) of string (9) and the second pliers (12), which engage alternately a point of the same string during the rotatory wrapping up action of the same around body (6) to be tied, and raise it above spool (14) during the crossing and the knotting, are located in substantially opposite positions.

8. The tying machine according to claims 1 through 7, characterized in that the couples of tiles (2) are configurated according to semicircular or circular sector profiles, or according to any polygonal profile, and are adjustable to one another.

9. The tying machine according to claims 1 through 8, characterized in that bodies (6) to be tied with two, four, six or more longitudinal turns and with a plurality of peripheral tying rings (28) connected with knots (27) are guided along the path in one direction or in both opposite directions within the tubular duct (1), by means of an adjustment and trueing front rod (4) and a back pusher (5), which come to lie on bottoms (11) and (29) of the same bodies.

10. The tying machine according to claims 1 through 9, characterized in that bodies (6) to be tied with more than two longitudinal turns are subject to forwards and backwards coaxial shiftings along the tubular duct (1) with rotations of the same and of the means restraining string (9), with knot-crossings of the same in correspondence with bottoms (11) and (29).

11. The tying machine according to claims 1 through 10, characterized in that spool (14) is supported by two opposite coaxial pins (16), having an alternate motion of moving away and unhooking and approaching and hooking in seats coaxial with the same spool, which are also coaxial with truncated-cone guide means (37).

12. The tying machine according to claims 1 through 11, characterized in that spool (14) is hinged in side plates (37') on which at least two or more seats are obtained, located at the sides of the spool support, in which engage as many side pins (16) protruding from corresponding coupled seats (18) obtained in the plate wheels.

13. The tying machine according to claims 1 through 12, characterized in that pins (16) or (16') are polygonal sections and engage with complementary corresponding seats, obtained coaxially to spool (14) or laterally relatively to the supports of said spool, on side plates (17') provided with peripheral guide chamferings.

14. The tying machine according to claim 1, characterized in that the central operating head (48) comprises one or two fixed seats (20), with internal circular rotating plate wheels (19) in which engage the single stirrup (37') or double stirrup (37) supporting spool (14) where string (9) winds for a length useful for tying one or a prefixed number of bodies (6) to be treated; said stirrup(s) (37'), (37) being engaged with the above plate wheel(s) (19) through one or two pluralities of orthogonal pins (16') (16), which have an alternate and sequential backwards and extension motion, with disengagement and following engagement with seats (158') and (158) obtained in the same stirrups, according to and in synchronism with the crossing of string (9), raised and stretched by pliers (12) helped by a hooking means (58), and of the aforementioned spool (14), in orbital motion around the body to be tied (6), with passage under the same string; said spool (14) being in its turn provided, besides the rotating handling means (60), (59), (15), also with a cone-shaped fan (53) on which radial grooves (52) are provided in which end (8) of string (9) engage performing the wrapping up, when said string is caused to align with the above fan by means of small pliers (47) or a piston (67) which takes end (8) from an alignment means (42) or (61), engaged with a mobile arm (40).

15. The tying machine according to claims 1 and 14, characterized in that the central operating head (48) is provided with two circular plate wheels or sectors (19), located in fixed seats (20) parallel and opposite, wherein pluralities of orthogonal seats (18) are obtained which house as many pins (16) with elastic elements (17), whose front ends protrude from the opposite side walls arranged side by side of the same plate wheels, and supportingly engage in as many seats (158) obtained on the side supports (37) of the winding spool (14); said pins having an alternate and sequential backwards and extension motion in concomitance with string (9), one after the other, alternatingly from either sides of said supports (37), in synchronized sequence with passage of spool (14) under string (9), spaced from body (6) to be tied during its orbits around the same body.

16. The tying machine according to claims 1 and 14, characterized in that the operating head (48') is provided with one only circular plate wheel located in its own fixed seat (20) with which plate wheel is engaged, within orthogonal seats (18) with elastic means (17), a plurality of pins (16'), which comprise, at their ends, circumferential grooves (68) coupleable and connectable to cavities (158') obtained on stirrup (37'); said cavities being provided with semicircular bodies or small spheres (69) kept in position by pressure springs (70) which pressure-engage with the grooved ends (68) of said pins (16'); said pins having an alternate and sequential backwards and extension motion, in synchronism with the passage of spool (14) under string (9) spaced from body (6) to be tied, during its orbits around said body.

17. The tying machine according to claims 1 and 14 through 16, characterized in that it comprises a hooking device (42) or (61), with friction (43) or (64), which engages with a mobile arm (40) alignable with the central head (48), (48'), with al least small pliers (47) or piston (67) and with the guide duct (49) of a front pusher (50) with elastic jaws (51); to said hooking device head (8) of string (9) couples which, in starting grip and guide conditions, is caused to align with the radial grooves (52) of the cone-shaped fan (53) rotating together with the winding spool (14).

18. The tying machine according to claims 1 and 14 through 17, characterized in that the hooking device (42) connected to the mobile arm (40), comprises a friction grip with upper jaws and pliers (43) provided with an annular space (46) into which small pliers (47) can be introduced for gripping said end (8); said pliers (43) being openable under the traction of the string, by means of a movement around a fulcrum (155) with elastic return (156).

19. The tying machine according to claims 1 and 14 through 17, characterized in that the hooking device (61) comprises the elastic telescopic connection of two tubular coaxial bodies (61) and (62), the one being fitted into the other with interposition of a spring (63); said tubular bodies being aligneable with hole (66) of another orthogonal tubular body (65) in which a piston restraining end (8) of string (9) is provided.

20. The tying machine according to claims 1 and 14 through 19, characterized in that it comprises a front elastic pusher, with pressure-openable mobile jaws (51) between which a guide duct and an alignment sector (55) for the tying string (9) are formed.

21. The tying machine according to claims 1 and 14 through 20, characterized in that pins (16) and (16') are controlled, in their backwards and return motions relatively to cavities (158) and (158') by means of fixed back cams (33) obtained on the sides of said fixed sectors (20); said cams being replaceable by pneumatic or hydraulic pistons, by electromechanical systems with electromagnets or the like.

22. The tying machine according to claims 1 and 14 through 21, characterized in that the motor-control (15) of gear (60) coupled with the mobile spool (14) comprises a pinion (59) applied to a mechanical or electromechanical retractable means which unhooks the coupling during the stages of crossing of spool (15) with the taut string (9), passing under it, and rehooks the coupling during the stage of string winding on the same spool, and at each end of orbital rotation of the spool around body (6) to be tied, with the function of stretching the string.

23. The tying machine according to claims 1 through 8, characterized in that the motor-control (15) is provided with a pulley on which a belt engages having a high friction coefficient, which couples with a second dragging pulley and a third stretching pulley; said dragging pulley engaging in adherence and dragging with, or disengaging from, a friction wheel keyed on spool (14), said engagement depending on the winding of string (9) on the spool and the tautness of the same string at the end of each orbital rotation of the spool around body (6) to be tied.

24. The tying machine according to claims 1 and 14 through 23, characterized in that the string wound on spool (14) is stretched by means of a friction (54).

25. The tying machine according to claims 1 and 14 through 24, characterized in that it may or may not be provided with at least a means of peripheral grip, such as half-rings (72) hinged in an intermediate point of theirs and having their fulcrum at one common end (74) on a rectractable rod (75) with a return spring (76), which telescopically engages with an actuating piston (78), with whose external end engage also the end parts (79) of arms (80) constituting the means on which hinges (73) are located; said gripping means (71) being aligned with cavity (13) of the central heads (48), (48'), with the half-rings located astride the zone where string (9) is wrapped up around bodies (6) for the formation of the knots, and with the half-rings which grip around bodies (6) during the stages of recovery and stretching of the knotted string.

## Patentansprüche

1. Einzelfaden-Knotenknüpfmaschine, die aus einem mittleren Betätigungskopf (48), der wenigstens einen in Sektoren unterteilten ringförmigen Körper (20) mit Umfangsdreheinrichtungen (19), in die Zapfen (16') bzw. Paare senkrechter Zapfen (16) eingreifen, einer lastaufnehmenden Struktur (37) bzw. (37') besteht, die eine Spule (14) für fadenartige Knüpfelemente (9) umfaßt, wobei der ringförmige Körper (20) mit Zangen bzw. Halteelementen (7), (12), (42), (47) verbunden ist, die auf das fadenartige Element (9) wirken und dazu beitragen, dieses in Längshaftung am Umfang von Körpern (6), an denen die Verknüpfungen ausgeführt werden sollen, und in vorübergehender Arretierung zu halten, wobei die Spule (14) um die Körper (6) alternierend bei schrittweisem axialen Weiterrücken derselben gedreht wird, dadurch gekennzeichnet, daß die Zapfen (16) bzw. (16') koaxial mit axialen Gleitvorrichtungen (17), (32), (34) in Eingriff sind, die die Zapfen bzw. Paare von Zapfen abwechselnd und nacheinander betätigen, und daR die Zangen bzw. Halteelemente (7), (12), (42), (47) des weiteren dazu beitragen, das fadenartige Element (9) bei zentrifugaler radialer Verschiebung und anschließender Rückführung unter Zug zu halten, wobei sie über die Spule laufen.

2. Knotenknüpfmaschine nach Anspruch 1, **dadurch gekennzeichnet**, daß sie eine röhrenförmige Leitung (1) umfaßt, die durch Paare in Umfangsrichtung angeordneter Röhren (2) gebildet wird, und in der sich ein Körper (6) zunehmend weiterbewegt und in Längsrichtung von einer Seite mit einem Knüpfelement bzw. einem Faden (9) in Eingriff kommt, dessen Ende sich in der Zange (7) einer ersten Seite befindet, und an der anderen Seite mit der Fortsetzung des gleichen Fadens (9), der sich in der zweiten Zange (12) befindet, die ihn hält, während der Faden bei jeder Drehung von einer Spule (14) abgewickelt wird, die die Spule um die röhrenförmige Leitung und daher um den einzuknüpfenden Körper in Knüpfkombination mit Plattenrädern (19) ausführt, die in ringförmigen Aufnahmen (20) koaxial zu der röhrenförmigen Leitung (1) angeordnet sind, wobei die Paare von Röhren (2) aufeinander zu bewegt werden können, jedoch Längsrillen (10) für das Hindurchtreten der Längswindungen von Fäden (9) und eine Umfangsrille (13) für das Hindurchtreten des gleichen Fadens (9) beim schrittweisen Umfangseinwickeln vorhanden sind, und das schrittweise Schlingeneinwickeln wechselt mit einem Anheben des Endes von Faden (9), das sich in der zweiten Zange (12) befindet, die bei jeder Drehung der Spule offen oberhalb vorbeiläuft und sich an der Seite des Körpers (6) wieder schließt, wobei er ständig von der zweiten Zange (12) ergriffen ist; wobei das Vorbeilaufen mit dem Lösen von Zapfen (16') bzw. Paaren von Seitenzapfen (16') aus den entsprechenden koaxialen Aufnahmen und erneutem Eingriff mit denselben kombiniert wird, die auf der Achse der Halterungen (13) der Spule (14) abwechselnd zueinander vorhanden sind, die sich entsprechend dem Vorbeilaufen von Faden (9) abwechseln, der von der zweiten Zange (12) gezogen wird.

3. Knüpfmaschine nach den Ansprüchen 1 und 2, **dadurch gekennzeichnet**, daß Plattenräder (19) in Umfangsrichtung gleitend in stationäre ringförmige Aufnahmen (20) koaxial zu der röhrenförmigen Leitung (1) eingreifen, und daß die Plattenräder (19) und Aufnahmen (20) aus wenigstens zwei Hälften bestehen, die in der Durchmesser-Richtung soweit voneinander entfernt sind, daß Durchmesser-Hohlräume (22) entstehen, die bei jeder Drehung auf die Längshohlräume (10) ausgerichtet werden, die zwischen den aufeinander zu bewegten Paaren von Röhren (2) bestehen, wobei die Plattenräder bzw. Sektoren von Plattenrädern durch eine Vielzahl von Umfangsritzeln (23) gedreht und in Position gehalten werden, die mit ihnen über Umfangsöffnungen (24) in Eingriff sind, die an den stationären Aufnahmen (20) vorhanden sind, und die ebenfalls Umfangsschlitze (21) umfassen, aus denen die Zapfen bzw. Paare von Seitenzapfen (16), (16'), die die Spule (14), auf die Faden (9) gewickelt ist, tragen, vorstehen und dem Drehweg der Plattenräder (19) folgen, wobei sich die obenerwähnten Zapfen (16) bzw. (16') in Aufnahmen (18) befinden, die quer zu den Plattenrädern (19) angeordnet sind, und in denen sie durch Gegenfedern (17) gehalten werden, die auf ihre Kappen (32) wirken.

4. Knüpfmaschine nach den Ansprüchen 1, 2 und 3, **dadurch gekennzeichnet**, daß die Rückwände der stationären ringförmigen Aufnahmen (20) nockenartige Nuten bzw. Öffnungen (33) aufweisen, die mit äußeren Nocken (34) verbunden sind, auf die sie ausgerichtet sind, während Zapfen (16), (16') durch Kappen (32) der gleichen Zapfen rückwärts bewegt werden, die durch Federn (17) gedrückt werden; wobei die Öffnungen und Nocken an den Haltepunkten der Drehung der Spule (14) um die röhrenförmige Leitung herum angeordnet sind und das Ausfahren und Zurückführen der Position der Zapfen (16) bzw. (16') abwechselnd dem Vorbeilaufen des Fadens (9) über der Spule (14) und in Hälsen (35) und (36) entsprechen, die zwischen der Spule und den Aufnahmen (20) vorhanden sind, wobei die Schnur (9) gekreuzt und verknotet (27) wird.

5. Knüpfmaschine nach den Ansprüchen 1 bis 4, **dadurch gekennzeichnet**, daß die Spule (14), von der Fäden (9) während der aufeinanderfolgenden und abwechsenden Umfangsdrehungen um Körper (6) abgewickelt wird, mit einem Miniverteiler (16) versehen ist, der die Schnur dehnt.

6. Knüpfmaschine nach den Ansprüchen 1 bis 5, **dadurch gekennzeichnet**, daß die röhrenförmige Leitung (1) durch ein oder mehrere Paare von Röhren (2) gebildet wird, die in Umfangsrichtung einander entgegengesetzt mit offenen Laufbahnen längs (10) und mit wenigstens einem Umfangsschlitz (13) zum Hindurchtreten von Faden (9) in beiden Richtungen versehen ist.

7. Knüpfmaschine nach den Ansprüchen 1 bis 6, **dadurch gekennzeichnet**, daß die erste Zange (17), die das Ende (8) von Faden (9) hält, und die zweite Zange (12), die abwechselnd an einem Punkt des Fadens während der Dreheinwickelbewegung derselben um den Körper (6), der einzuknüpfen ist, angreifen und ihn während des Kreuzens und Verknotens über die Spule (14) anheben, an im wesentlichen entgegengesetzten Positionen angeordnet sind.

8. Knüpfmaschine nach den Ansprüchen 1 bis 7, **dadurch gekennzeichnet**, daß die Paare von Röhren (2) mit Halbkreis- oder Kreissektorprofilen oder jedem beliebigen Vieleckprofil ausgebildet sind und aufeinander ausgerichtet werden können.

9. Knüpfmaschine nach den Ansprüchen 1 bis 8, **dadurch gekennzeichnet**, daß Körper (6), die mit zwei, vier, sechs oder mehr Längswindungen und mit einer Vielzahl von Umfangsknüpfringen (28), die mit Knoten (27) verbunden sind, eingeknüpft werden sollen, auf dem Weg in einer Richtung oder in beiden einander entgegengesetzten Richtungen in der röhrenförmigen Leitung (1) mit einer Einstell-und-Ausricht-Vorderstange (4) und einem Rückdrücker (5) geführt werden, die an unteren Enden (11) und (29) der Körper anlegen.

10. Knüpfmaschine nach den Ansprüchen 1 bis 9, **dadurch gekennzeichnet**, daß Körper (6), die mit mehr als zwei Längswindungen eingeknüpft werden sollen, in der röhrenförmigen Leitung (1) koaxial vorwärts und rückwärts bei Drehung derselben und der Einrichtungen, die Faden (9) halten, verschoben werden, wobei selbiger an den unteren Enden (11) und (29) kreuzweise verknotet wird.

11. Knüpfmaschine nach den Ansprüchen 1 bis 10, **dadurch gekennzeichnet**, daß die Spule (14) von zwei einander gegenüberliegenden koaxialen Zapfen (16) getragen wird, die eine abwechselnde Bewegung ausführen, bei der sie sich aus Aufnahmen wegbewegen und aushaken und sich selbigen annähern und in sie einhaken, wobei diese koaxial zu der Spule und auch koaxial zu einer kegelstumpfförmigen Führungseinrichtung (37) sind.

12. Knüpfmaschine nach den Ansprüchen 1 bis 11, **dadurch gekennzeichnet**, daß die Spule (14) in Seitenplatten (37') gelenkig angebracht ist, an denen wenigstens zwei oder mehr Aufnahmen vorhanden sind, die sich an den Seiten der Spulenhalterung befinden, und in die ebensoviele Seitenzapfen (16) eingreifen, die aus entsprechenden verbundenen Aufnahmen (18) vorstehen, die in den Plattenrädern vorhanden sind.

13. Knüpfmaschine nach den Ansprüchen 1 bis 12, **dadurch gekennzeichnet**, daß die Zapfen (16) bzw. (16') vieleckige Querschnitte haben und mit entsprechenden komplementären Aufnahmen in Eingriff kommen, die koaxial zu der Spule (14) bzw. quer zu den Halterungen der Spule an Seitenplatten (17') vorhanden sind, die mit Umfangsführungsfasen versehen sind.

14. Knüpfmaschine nach Anspruch 1, **dadurch gekennzeichnet**, daß der mittlere Betätigungskopf (48) eine oder zwei stationäre Aufnahmen (20) mit inneren kreisförmigen, sich drehenden Plattenrädern (19) umfaßt, in die der Einzelbügel (37') bzw. Doppelbügel (37) eingreift, der die Spule (14) trägt, auf die Faden (9) in einer Länge aufgewickelt ist, die zum Einknüpfen eines oder einer vorgegebenen Anzahl von Körpern (6), die bearbeitet werden sollen, geeignet ist, wobei der/die Bügel (37'), (37) mit den obenbeschriebenen Plattenrädern (19) über eine oder zwei Vielzahlen senkrechter Zapfen (16') (16) in Eingriff sind, die abwechselnde und aufeinanderfolgende Rückwärts- und Ausfahrbewegung ausführen, wobei es zum Lösen aus Aufnahmen (158') und (158), die in den Bügeln vorhanden sind, und anschließendem Eingreifen in selbige bei dem Kreuzen von Faden (9), der von Zangen (12) durch eine Hakeinrichtung (58) unterstützt angehoben und gedehnt wird, von der erwähnten Spule (14) in den einzuknüpfenden Körper (6) umkreisender Bewegung beim Hindurchlaufen unter der Schnur kommt; wobei die Spule (14) ihrerseits neben den Drehbewegungseinrichtungen (60), (59), (15) des weiteren mit einem kegelförmigen Propeller (53) versehen ist, an dem radiale Nuten (52) vorhanden sind, in die ein Ende (8) des Fadens (9) beim Ausführen des Einwickelns eingreift, wenn der Faden mit kleinen Zangen (47) oder einem Kolben (67), der das Ende (8) von einer Ausrichteinrichtung (42) bzw. (61) aufnimmt, die mit einem beweglichen Arm (40) in Eingriff ist, auf den obenbeschriebenen Propeller ausgerichtet wird.

15. Knüpfmaschine nach den Ansprüchen 1 und 14, **dadurch gekennzeichnet**, daß der mittlere Betätigungskopf (48) mit zwei kreisförmigen Plattenrädern bzw. Sektoren (19) versehen ist, die sich in stationären Aufnahmen (20) parallel und entgegengesetzt zueinander befinden, wobei Vielzahlen von senkrechten Aufnahmen (18) vorhanden sind, die ebensoviele Zapfen (16) mit elastischen Elementen (17) aufnehmen können, deren vordere Enden aus den einander gegenüberliegenden Seitenwänden neben den Plattenrädern angeordnet vorstehen, und die in ebensoviele Aufnahmen (158) tragend eingreifen, die an den seitlichen Halterungen (37) der Wickelspule (14) vorhanden sind; wobei die Zapfen eine abwechselnde und aufeinanderfolgende Rückwärts- und Ausfahrbewegung zusammen mit dem Faden (9) nacheinander abwechselnd von beiden Seiten der Halterung (37) in synchronisierter Reihenfolge zu dem Durchlauf der Spule (14) unter dem Faden (9) von dem einzuknüpfenden Körper (6) beabstandet während seiner Umlaufbewegung um den Körper herum ausführen.

16. Knüpfmaschine nach den Ansprüchen 1 und 14, **dadurch gekennzeichnet**, daß der Betätigungskopf (48') mit einem einzigen kreisförmigen Plattenrad, das sich in seiner eigenen stationären Aufnahme (20) befindet, mit der das Plattenrad in Eingriff ist, in senkrechten Aufnahmen (18) mit elastischen Einrichtungen (17), einer Vielzahl von Zapfen (16') versehen ist, die an ihren Enden Umfangsnuten (68) umfassen, die mit Hohlräumen (158') gekoppelt und verbunden werden können, die an dem Bügel (37') vorhanden sind, wobei die Hohlräume mit halbkreisförmigen Körpern oder kleinen Kugeln (69) versehen sind, die durch Druckfedern (70) in Position gehalten werden, die mit den genuteten Enden (68) der Zapfen (16') unter Druck in Eingriff sind, wobei die Zapfen eine abwechselnde und aufeinanderfolgende Rückwärts- und Ausfahrbewegung synchron zum Hindurchlauf der Spule (14) unter dem Faden (9) von dem einzuknüpfenden Körper (6) beabstandet während seiner Umlaufbewegungen um den Körper herum ausführen.

17. Knüpfmaschine nach den Ansprüchen 1 und 14 bis 16, **dadurch gekennzeichnet**, daß sie eine Hakvorrichtung (42) bzw. (61) mit einer Reibeinrichtung (43) bzw. (64) umfaßt, die mit einem beweglichen Arm (40), der auf den mittleren Kopf (48), (48') ausgerichtet werden kann, mit wenigstens einer kleinen Zange (47) bzw. einem Kolben (67) und mit der Führungsleitung (49) eines vorderen Drückers (50) mit elastischen Klauen (51) in Eingriff kommt, wobei das Ende (8) von Schnur (9), das unter anfänglichen Greif- und Führungsbedingungen auf die radialen Nuten (52) des kegelförmigen Propellers (53), der sich zusammen mit der Wickelspule (14) dreht, ausgerichtet wird, mit der Hakvorrichtung verbunden wird.

18. Knüpfmaschine nach den Ansprüchen 1 und 14 bis **17, dadurch gekennzeichnet**, daß die Hakvorrichtung (42), die mit dem beweglichen Arm (40) verbunden ist, eine Reibgreifvorrichtung mit oberen Klauen und Zangen (43) umfaßt, die mit einem ringförmigen Zwischenraum (46) versehen ist, in den eine kleine Zange (47) eingeführt werden kann, um das Ende (8) zu ergreifen, wobei die Zange (43) unter dem Zug des Fadens durch Bewegung um einen Drehpunkt (155) mit elastischer Rückführung (156) geöffnet werden kann.

19. Knüpfmaschine nach den Ansprüchen 1 und 14 bis 17, **dadurch gekennzeichnet**, daß die Hakvorrichtung (61) die elastische Teleskopverbindung zweier röhrenförmiger koaxialer Körper (61) und (62) umfaßt, wobei der eine in den anderen eingesetzt ist und sich eine Feder (63) zwischen ihnen befindet, wobei die röhrenförmigen Körper auf eine Öffnung (66) eines anderen rechtwinkligen röhrenförmigen Körpers (65) ausgerichtet werden können, in dem ein Kolben vorhanden ist, der das Ende (8) des Fadens (9) hält.

20. Knüpfmaschine nach den Ansprüchen 1 und 14 bis 19, **dadurch gekennzeichnet**, daß sie einen vorderen elastischen Drücker mit unter Druck zu öffnenden beweglichen Klauen (51) umfaßt, zwischen denen eine Führungsleitung und ein Ausrichtsektor (55) für den Knüpffaden (9) ausgebildet sind.

21. Knüpfmaschine nach den Ansprüchen 1 und 14 bis 20, **dadurch gekennzeichnet**, daß die Zapfen (16) und (16') in ihrer Rückwärts- und Rückführbewegung in bezug auf Hohlräume (158) und (158') mit stationären hinteren Nocken (33) gesteuert werden, die an den Seiten der stationären Sektoren (20) vorhanden sind, wobei die Nocken durch pneumatische oder hydraulische Kolben, durch elektromechanische Systeme mit Elektromagneten oder dergleichen ersetzt werden können.

22. Knüpfmaschine nach den Ansprüchen 1 und 14 bis 21, **dadurch gekennzeichnet**, daß die Motorsteuerung (15) eines Zahnrades (60), das mit der beweglichen Spule (14) verbunden ist, ein Ritzel (59) umfaßt, das an einer mechanischen oder elektromechanischen einziehbaren Einrichtung angebracht ist, die die Verbindung während der Stadien des Kreuzens der Spule (15) mit dem gespannten Faden (9) der darunter hindurchläuft, löst, und die Verbindung während des Stadiums des Aufwickelns von Faden auf die Spule wiederherstellt, wobei am Ende jeder Umlaufdrehung der Spule um den einzuknüpfenden Körper (6) herum der Faden gedehnt wird.

23. Knüpfmaschine nach den Ansprüchen 1 bis 8, **dadurch gekennzeichnet**, daß die Motorsteuerung (15) mit einer Riemenscheibe versehen ist, auf der ein Riemen mit einem hohen Reibungskoeffizienten läuft, der mit einer zweiten Laufriemenscheibe und einer dritten Dehnriemenscheibe verbunden ist, wobei die Laufriemenscheibe mit einem Reibrad, das auf die Spule (14) gekeilt ist, haftend in Eingriff kommt und damit läuft oder sich von ihm löst, wobei der Eingriff vom Aufwickeln von Faden (9) auf der Spule und der Gespanntheit des Fadens am Ende jeder Umlaufdrehung der Spule um den einzuknüpfenden Körper (6) herum abhängt.

24. Knüpfmaschine nach den Ansprüchen 1 und 14 bis 23, **dadurch gekennzeichnet**, daß der auf eine Spule (14) aufgewickelte Faden durch Reibung (54) gedehnt wird.

25. Knüpfmaschine nach den Ansprüchen 1 und 14 bis 24, **dadurch gekennzeichnet,** daß sie mit wenigstens einer Einrichtung zum Umfangsgreifen versehen sein kann oder nicht versehen sein kann, so beispielsweise mit Halbringen (72), die an einem Zwischenpunkt gelenkig angebracht sind und deren Drehpunkt sich an einem gemeinsamen Ende (74) an einer einziehbaren Stange (75) mit einer Rückstellfeder (76) befindet, die teleskopartig mit einem Betätigungskolben (78) in Eingriff ist, dessen äußeres Ende des weiteren mit den Endteilen (79) von Armen (80) in Kontakt ist, die die Einrichtung bilden, an der sich Gelenke (73) befinden, wobei die Greifeinrichtungen (71) auf einen Hohlraum (13) der mittleren Köpfe (48), (48') ausgerichtet sind, auf die Halbringe, die sich über dem Bereich befinden, in dem Faden (9) um Körper (6) gewickelt wird, um die Knoten herzustellen, und die Halbringe, die während des Zurückholens und Dehnens des verknoteten Fadens um die Körper (6) herumgreifen.

## Revendications

1. Machine à nouer à un seul bout constituée par une tête centrale (48) de travail comportant au moins un corps annulaire (20) subdivisé en secteurs, avec des moyens circonférentiels (19) de rotation qui s'engagent, par des broches (16') ou des couples de broches orthogonales (16), une structure de charge (37) ou (37') portant une bobine (14) pour des éléments (9) de nouage analogues à un fil ; ledit corps annulaire (20) étant accouplé à des pinces ou éléments de retenue (7), (12), (42), (47) qui, agissant sur ledit élément (9) analogue à un fil, contribuent à maintenir en adhérence longitudinale sur la périphérie de corps (6) sur lesquels les nouages doivent être réalisés et en blocage temporaire, ladite bobine (14) étant amenée à tourner autour desdits corps (6), de façon alternée avec une avance axiale pas à pas de ceux-ci, caractérisée en ce que lesdites broches (16) ou (16') sont engagées coaxialement avec des dispositifs coulissants axiaux (17), (32), (34), actionnant alternativement et séquentiellement lesdites broches ou le couple de broches et en ce que lesdites pinces ou lesdits éléments de retenue (7), (12), (42), (47) contribuent en outre à maintenir ledit élément (9) analogue à un fil en traction avec une translation radiale centrifuge et un retour qui suit, en surmontant ladite bobine.

2. Machine à nouer selon la revendication 1, caractérisée en ce qu'elle comporte un conduit tubulaire (1), formé par des couples de tuiles (2) disposés de façon périphérique, dans lequel un corps (6) avance progressivement, engageant longitudinalement, à partir d'un côté, un élément de nouage ou cordon (9) dont une extrémité est engagée dans des premières pinces latérales (7) et, sur l'autre extrémité, dans la continuation du même cordon (9), qui s'engage dans les secondes pinces (12) qui le retiennent, tandis que la même cordon se déroule d'une bobine (14) pendant chaque tour, laquelle bobine est engagée pour travailler autour du conduit tubulaire et, par conséquent, du corps devant être noué, en combinaison de nouage avec des roues plates (19) situées dans des sièges annulaires (20), coaxialement au conduit tubulaire (1), lesdits couples de tuiles (2) pouvant être approches l'un de l'autre à l'exception de la présence de gorges longitudinales (10) pour le passage des tours longitudinaux du cordon (9) et d'une gorge périphérique (13) pour le passage du même cordon (9) pour son enveloppement périphérique pas à pas ; l'enveloppement en boucle pas à pas étant alternée par une élévation de l'extrémité du cordon (9), engagée dans les secondes pinces (12), qui s'ouvrent, passent en dessus, à chaque tour de la bobine, et se referment sur le côté du corps (6), toujours serrée par les secondes pinces (12) ; ledit passage étant combiné avec le dégagement et le réaccouplement des broches (16') ou des couples de broches latérales (16) avec les sièges coaxiaux correspondants obtenus sur l'axe des supports (13) de la bobine (14), alternant entre eux et conformément au passage du cordon (9), tiré par lesdites secondes pinces (12).

3. Machine à nouer selon les revendications 1 et 2, caractérisée en ce que des roues plates (19) sont engagées en glissement circonférentiel dans des sièges annulaires (20) fixes coaxiaux au conduit tubulaire (1) et en ce que lesdites roues plates (19) et les sièges (20) sont formés d'au moins deux moitiés, éloignées l'une de l'autre dans la direction diamétrale d'une distance telle qu'ils forment des cavités diamétrales (22), lesquelles, à leur tour, s'alignent avec les cavités longitudinales (10) obtenues entre les couples rapprochés de tuiles (2) : lesdites roues plates ou des secteurs des roues plates étant amenés à tourner et étant maintenus en position par plusieurs pignons périphériques (23) qui les engagent à travers des ouvertures périphériques (24) obtenues sur les sièges fixes (20), qui comprennent également des fentes circonférentielles (21), desquelles font saillie, et suivent le trajet en rotation des roues plates (19), les broches ou les couples de broches latérales (16), (16') supportent la bobine (14) sur laquelle un cordon (9) est enroulé ; les broches (16) ou (16') ci-dessus sont placées dans des sièges (18) situés transversalement vers lesdites roues plates (19) et y restent au moyen de ressorts antagonistes (17) qui agissent sur leurs chapeaux (32).

4. Machine à nouer selon les revendications 1, 2 et 3, caractérisée en ce que les parois arrière des sièges annulaires fixes (20) présentent des gorges ou ouvertures (33) analogues à des cames couplées à des cames extérieures (34) avec lesquelles elles s'alignent, tandis que les broches (16), (16') sont déplacées vers l'arrière par les chapeaux (32) des mêmes broches poussés par des ressorts (17) ; lesdites ouvertures et cames étant placées en correspondance des points d'arrêt de la rotation de la bobine (14) autour du conduit tubulaire, et la saillie et le rétablissement de la position des broches (16) ou (16') correspondent, alternativement, aux passages du cordon (9) au-dessus de la bobine (14) et le long d'étranglements (35) et (36), constitués entre la même boine et les sièges (20), avec croisement du cordon (9) et nouage (27) de celui-ci.

5. Machine à nouer selon les revendications 1 à 4, caractérisée en ce que la bobine (14) de laquelle le cordon (9) se déroule, pendant les rotations périphériques séquentielles et alternées autour des corps (6), est pourvue d'un minidiviseur (16) qui étire le même cordon.

6. Machine à nouer selon les revendications 1 à 5, caractérisée en ce que le conduit tubulaire (1) est constitué d'un ou plusieurs couples de tuiles (2) opposés de façon périphérique avec des chemins ouverts longitudinaux (10) et avec au moins une lente périphérique (13) pour le passage du cordon (9) dans les deux directions.

7. Machine à nouer selon les revendications 1 à 6, caractérisée en ce que les premières pinces (7), une extrémité de retenue (8) du cordon (9) et les secondes pinces (12), qui engagent de façon alternée un point du même cordon pendant l'action d'enveloppement par rotation de celui-ci autour du corps (6) devant être noué, et l'élèvent au-dessus de la bobine (14) pendant le croisement et le nouage, sont placées dans des positions sensiblement opposées.

8. Machine à nouer selon les revendications 1 à 7, caractérisée en ce que les couples de tuiles (2) sont configurés conformément à des profils de secteurs semi-circulaires ou circulaires, conformément à tout profil polygonal, et sont réglables entre eux.

9. Machine à nouer selon les revendications 1 à 8, caractérisée en ce que des corps (6) devant être noués avec deux, quatre, six tours longitudinaux ou plus et avec plusieurs anneaux de nouage périphériques (28) reliés à des noeuds (27) sont guidés le long du trajet dans un sens ou dans deux sens opposés à l'intérieur du conduit tubulaire (1), au moyen d'une tige avant (4) de réglage et de redressement et d'un poussoir arrière (5), qui viennent s'appliquer sur des fonds (11) et (29) des mêmes corps.

10. Machine à nouer selon les revendications 1 à 9, caractérisée en ce que des corps (6) devant être noués avec plus de deux tours longitudinaux sont soumis à des déplacements coaxiaux vers l'avant et vers l'arrière le long du conduit tubulaire (1) avec des rotations de celui-ci et des moyens retenant le cordon (9), avec des croisements de noeuds de celui-ci en correspondance avec les fonds (11) et (29).

11. Machine à nouer selon les revendications 1 à 10, caractérisée en ce que la bobine (14) est supportée par deux broches coaxiales opposées (16), ayant un mouvement alterné d'éloignement et de décrochage, et d'approche et d'accrochage dans des sièges coaxiaux avec la même bobine, lesquels sont également coaxiaux avec des moyens tronconiques de guidage (37).

12. Machine à nouer selon les revendications 1 à 11, caractérisée en ce que la bobine (14) tourillonne dans des plaques latérales (37') sur lesquelles au moins deux ou plus de doux sièges sont obtenus, situés sur les côtés du support de la bobine, dans lesquels s'engagent autant de broches latérales (16) faisant saillie de sièges accouplés correspondants (18) obtenus dans les roues plates.

13. Machine à nouer selon les revendications 1 à 12, caractérisée en ce que les broches (16) ou (16') sont des sections polygonales et s'engagent avec des sièges correspondants complémentaires, obtenus coaxialement à la bobine (14) ou latéralement par rapport aux supports de ladite bobine, sur des plaques latérales (17') pourvues de chanfreins périphériques de guidage.

14. Machine à nouer selon la revendication 1, carctérisée en ce que la tête centrale (48) de travail comporte un ou deux sièges fixes (20), avec des roues plates intérieures, circulaires et tournantes (19) dans lesquelles s'engage l'étrier unique (37') ou l'étrier double (37) supportant la bobine (14) ou le cordon (9) s'enroule sur une longueur utilisable pour nouer un ou un nombre préalablement fixé de corps (6) devant être traités; ledit ou les étriers (37'), (37) étant engagés avec la ou les roues plates précitées (19) par l'intermédiaire d'une ou deux pluralités de broches orthogonales (16'), (16), qui exécutent des mouvements alternés et séquentiels de recul et d'extension, avec dégagement et engagement ensuite avec des sièges (158') et (158) obtenus dans les mêmes étriers, conformément à, et en synchronisme avec, le croisement du cordon (9), élevé et tiré par des pinces (12) aidées par un moyen d'accrochage (58), et de la bobine précitée (14), en mouvement orbital autour du corps devant être noué (6), avec passage au-dessous du même cordon ; ladite bobine (14) étant à son tour pourvue, en, plus des moyens rotatifs de manipulation (60), (59), (15), également d'un ventilateur (53) en forme de cône sur lequel sont prévues des gorges radiales (52) dans lesquelles une extrémité (8) du cordon (9) s'engage en réalisent l'enveloppement, lorsque ledit cordon est amené à s'aligner avec le ventilateur précité au moyen de petites pinces (47) ou d'un piston (67) qui prend une extrémité (8) à partir d'un moyen d'alignement (42) ou (61), engagé avec un bras mobile (40).

15. Machine à nouer selon les revendications 1 et 14, caractérisée on ce que la tête centrale (48) de travail est pourvue de deux roues ou secteurs plats circulaires (19), placés dans des sièges fixes (20) parallèles et opposés, où des pluralités de sièges orthogonaux (18) sont obtenus, lesquels logent autant de broches (16) avec des éléments élastiques (17), dont des extrémités avant font saillie des parois latérales opposées agencées côte à côte des mêmes roues plates, et s'engagent en formant support dans autant de sièges (158) obtenus sur les supports latéraux (37) de la bobine d'enroulement (14) ; lesdites broches exécutant des mouvements alternés et séquentiels de recul et d'extension en concomitance avec le cordon (9), l'une après l'autre, en alternance à partir de chacun des côtés desdits supports (37), en séquence synchronisée avec le passage de la bobine (14) sous le cordon (9), à distance du corps (6) devant être noué pendant son mouvement orbital autour du même corps.

16. Machine à nouer selon les revendications 1 et 14, caractérisée en ce que la tête de travail (48') est pourvue d'une seule roue plate circulaire placée dans son propre siège fixe (20) avec lequel la roue plate est engagée, à l'intérieur de sièges orthogonaux (18) avec des moyens élastiques (17), d'une pluralité de broches (16'), qui présentent, à leurs extrémités, des gorges circonférentielles (68) pouvant être accouplées et reliées à des cavités (158') obtenues sur un étrier (37') ; lesdites cavités étant pourvues de corps ou petites sphères semi-circulaires (69) maintenus en position par des ressorts de pression (70) qui s'engagent sous pression avec des extrémités à gorges (68) desdites broches (16') ; lesdites broches exécutant des mouvements alternés et séquentiels de recul et d'extension, on synchronisme avec le passage de la bobine (14) au-dessous du cordon (9) à distance du corps (6) devant être noué, pendant son mouvement orbital autour dudit corps.

17. Machine à nouer selon les revendications 1 et 14 à 16, caractérisée en ce qu'elle comporte un dispositif d'accrochage (42) ou (61), avec friction (43) ou (64), qui s'engage avec un bras mobile (40) pouvant être aligné avec la tête centrale (48), 48'), avec au moins des petites pinces (47) ou un piston (67) et avec le conduit de guidage (49) d'un poussoir avant (50) avec des mors élastiques (51) ; la tête (8) du cordon (9) s'accouplant audit dispositif d'accrochage, laquelle, dans des conditions de début de prise et de guidage, est amenée à s'aligner avec les gorges radiales (52) du ventilateur (53) en forme de cône tournant en même temps que la bobine d'enroulement (14).

18. Machine à nouer selon les revendications 1 et 14 à 17, caractérisée en ce que le dispositif d'accrochage (42) relié au bras mobile (40) comporte une prise à friction avec des mors supérieurs et des pinces (43) pourvus d'un espace annulaire (46) dans lequel de petites pinces (47) peuvent être introduites pour prendre ladite extrémité (8) ; lesdites pinces (43) pouvant être ouvertes sous la traction du cordon, au moyen d'un mouvement autour d'un point d'appui (155) avec un retour élastique (156).

19. Machine à nouer selon les revendications 1 et 14 à 17, caractérisée en ce que le dispositif d'accrochage (61) comporte la liaison télescopique élastique de deux corps tubulaires coaxiaux (61) et (62), le premier étant logé dans l'autre avec interposition d'un ressort (63) ; lesdits corps tubulaires pouvant être alignés avec un trou (66) d'un autre corps tubulaire orthogonal (65) dans lequel un piston retenant l'extrémité (8) du cordon (9) est prévu.

20. Machine à nouer selon les revendications 1 et 14 à 19, caractérisée en ce qu'elle comporte un poussoir élastique avant, avec des mors mobiles (51) pouvant être ouverts par pression, entre lesquels un conduit de guidage et un secteur d'alignement (55) pour le cordon de nouage (9) sont formés.

21. Machine à nouer selon les revendications 1 et 14 à 20, caractérisée en ce que les broches (16) et (16') sont commandées, dans leurs mouvements de recul et de retour relativement aux cavités (158) et (158'), au moyen de cames arrière fixes (33) situées sur les côtés desdits secteurs fixes (20) ; lesdites cames pouvant être remplacées par des pistons pneumatiques ou hydrauliques, par des systèmes électromécaniques avec des électro-aimants ou analogues.

22. Machine à nouer selon les revendications 1 et 14 à 21, caractérisée en ce que la commande à moteur (15) d'une roue dentée (60) accouplée à la bobine mobile (14) comporte un pignon (59) appliqué a un moyen rétractable mécanique ou électromécanique qui décroche l'accouplement pendant les étapes de croisement de la bobine (14) par le cordon tendu (9), passant au-dessous d'elle, et raccroche l'accouplement pendant l'étape d'enroulement du cordon sur la même bobine, et à chaque fin d'une rotation orbitale de la bobine autour du corps (6) devant être noué, avec la fonction d'étirer le cordon.

23. Machine à nouer selon les revendications 1 à 8, caractérisée en ce que la commande à moteur (15) est pourvue d'une poulie sur laquelle s'engage une courroie à coefficient de frottement élevé, qui s'accouple avec une deuxième poulie de retenue et une troisième poulie d'étirement ; ladite poulie de retenue s'engageant en adhérence et en retenue avec, ou se dégageant de, une roue de friction calée sur la bobine (14), ledit engagement dépendant de l'enroulement du cordon (9) sur la bobine et de la tension du même cordon à la fin de chaque rotation orbitale de la bobine autour du corps (6) devant être noué.

24. Machine à nouer selon les revendications 1 et 14 à 23, caractérisée en ce que le cordon enroulé sur une bobine (14) est étiré au moyen d'une friction (54).

25. Machine à nouer selon les revendications 1 et 14 à 24, caractérisée en ce qu'elle peut être pourvue ou non d'au moins un moyen de prise périphérique, tel que des demianneaux (72) articulés en un point intermédiaire d'eux-mêmes et ayant leur point d'appui à une extrémité commune (74) sur une tige rétractable (75) avec un ressort de rappel (76), qui S'engage télescopiquement avec un piston d'actionnement (78) dont une extrémité extérieure engage aussi les parties extrêmes (79) de bras (80) constituant le moyen sur lequel des artioulations (73) sont placées ; ledit moyen de prise (71) étant aligné avec une cavité (13) des têtes centrales (48), (48'), les demi-anneaux étant placés de façon à engendrer la zone où le cordon (9) est enroulé autour des corps (6) pour la formation dos noeuds, et avec les demianneaux qui réalisent une prise autour des corps (6) pendant les étapes de récupération et d'étirement du cordon noué.
